# EUROPÄISCHE PATENTSCHRIFT

(11) **EP 3 263 303 B1**
(45) Veröffentlichungstag und Bekanntmachung des Hinweises auf die Patenterteilung: **04.12.2019**
(21) Anmeldenummer: 17184736.1
(22) Anmeldetag: 02.10.2013
(51) Int. Cl.: B29B 11/16, B29B 15/10, B29C 70/46, B29K 21/00, B29K 101/12

(54) **VERFAHREN ZUR ERZEUGUNG EINES HALBZEUGS ZUR HERSTELLUNG EINES VERBUNDFORMTEILS, INSBESONDERE EINES FASERVERBUNDFORMTEILS**
METHOD FOR GENERATING A SEMIFINISHED PRODUCT FOR PRODUCING A COMPOSITE FORM PART, IN PARTICULAR A FIBRE COMPOUND FORM PART
PROCÉDÉ DE FABRICATION D'UN SEMI-PRODUIT DESTINÉ À FABRIQUER UN MOULE COMPOSITE, EN PARTICULIER MOULE COMPOSITE EN FIBRE

(30) Priorität: 02.10.2012 EP 12186973
(43) Veröffentlichungstag der Anmeldung: 03.01.2018
(62) Teilanmeldung aus: 13773227.7
(73) Patentinhaber: Reifenhäuser GmbH & Co. KG Maschinenfabrik, 53844 Troisdorf (DE)
(72) Erfinder: Cinquemani, Claudio, 50733 Köln (DE); Nitschke, Michael, 53639 Königswinter (DE); Quick, Nicolas, 59955 Winterberg (DE); Tobay, Armin, 53881 Euskirchen (DE)
(74) Vertreter: Rohmann, Michael

(56) Entgegenhaltungen:
- EP-A1- 0 420 772
- EP-A1- 1 714 772
- EP-A1- 1 923 192
- WO-A1-92/02357
- DE-A1- 10 105 813
- LEE MCKAGUE ED - MIRACLE & S L DONALDSON D B: "Thermoplastic resins", 1. Dezember 2001 (2001-12-01), ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 132 - 140, XP002677833, ISBN: 978-0-87170-703-1 * Seite 135 *

## Beschreibung

Die Erfindung betrifft ein Verfahren zur Erzeugung eines Halbzeugs zur Herstellung eines Verbundformteils, insbesondere eines Faserverbundformteils. - Die Erfindung betrifft vor allem Verbundformteile bzw. Faserverbundformteile in Leichtbauweise. Mit dem Begriff Verbundformteil ist gemeint, dass Verstärkungsmaterial bzw. nicht aufgeschmolzenes Verstärkungsmaterial in einer Matrix aus thermoplastischem Kunststoff eingebettet ist. Der Begriff Faserverbundformteil meint, dass in dem Verbundformteil bzw. in der Matrix aus thermoplastischem Kunststoff Fasern bzw. nicht aufgeschmolzene Fasern vorliegen. Die erfindungsgemäß hergestellten Verbundformteile bzw. Faserverbundformteile können einerseits eine zweidimensionale Form, insbesondere die Form einer Platte oder dergleichen, aufweisen. Vorzugsweise haben die erfindungsgemäß hergestellten Verbundformteile bzw. Faserverbundformteile eine dreidimensionale Form.

Verfahren, Halbzeuge und Verbundformteile der eingangs genannten Art sind aus der Praxis bereits in verschiedenen Ausführungsformen bekannt. Bei den bekannten Verfahren werden zunächst Halbzeuge hergestellt, die aus einer Matrix aus thermoplastischem Kunststoff und darin eingebetteten Verstärkungsfasern bestehen. Dazu werden die Verstärkungsfasern - beispielsweise Glasfasern - zunächst mit Folien, Pulver, Fasern oder Schmelze aus thermoplastischem Kunststoff kombiniert. Durch Beaufschlagung mit Wärme und Druck wird der thermoplastische Kunststoff aufgeschmolzen und auf diese Weise werden die Verstärkungsfasern mit der Schmelze imprägniert, sodass letztendlich das Halbzeug aus der thermoplastischen Matrix mit den eingebetteten Verstärkungsfasern resultiert. Diese Halbzeuge nennt man auch Organobleche und sie werden in der Regel in Form von Platten hergestellt. Die Platten müssen zur Herstellung eines Faserverbundformteils mit dreidimensionaler Form in einem späteren zusätzlichen Verarbeitungsschritt erneut erwärmt werden, bevor sie zu dem gewünschten Faserverbundformteil geformt werden können. Die bekannten Verfahren und Halbzeuge weisen eine Reihe von Nachteilen auf. Zunächst lässt bei der Herstellung der Halbzeuge - insbesondere bei der Verwendung von Folien aus thermoplastischem Kunststoff - das Ausmaß der Durchdringung bzw. Imprägnierung der Verstärkungsfasern mit dem thermoplastischen Kunststoff zu wünschen übrig. Fernerhin resultieren häufig Lufteinschlüsse und dadurch entstehen Schwachstellen in dem hergestellten Verbundformteil bzw. Faserverbundformteil. Außerdem zeichnen sich die erzeugten Halbzeuge oftmals durch eine unzureichende Drapierbarkeit aus. Deshalb ist die Herstellung von dreidimensionalen bzw. mehrdimensionalen Verbundformteilen bzw. Faserverbundformteilen Einschränkungen unterworfen. Weiterhin gestaltet sich das Recycling von bekannten Faserverbundmaterialien schwierig, wenn eine thermoplastische Matrix mit anorganischen oder schwer schmelzbaren Verstärkungsfasern verstärkt ist. Zudem ist auch das Recycling von Duroplasten bei nach den bekannten Maßnahmen hergestellten Verbundformteilen bzw. Faserverbundformteilen schwierig und aufwendig.

Aus EP 0 420 772 A1 ist ein Verfahren der eingangs genannten Art bekannt. Dabei wird ein höherschmelzendes Verstärkungsmaterial mit niedrigerschmelzenden Fasern aus thermoplastischem Kunststoff zu einem Laminat kombiniert. Die niedrigerschmelzenden Fasern werden ersponnen und anschließend mit dem höherschmelzenden Verstärkungsmaterial zu dem das Halbzeug bildenden Laminat kombiniert. Dieses bekannte Verfahren hat sich nicht durchgesetzt. Unter anderem lässt das Recycling der Verbundformteile zu wünschen übrig.

Demgegenüber liegt der Erfindung das technische Problem zugrunde, ein Verfahren der eingangs genannten Art anzugeben, bei dem die vorstehend beschriebenen Nachteile effektiv und funktionssicher vermieden werden können.

Zur Lösung dieses technischen Problems lehrt die Erfindung ein Verfahren zur Erzeugung eines Halbzeugs für die Herstellung eines Verbundformteils, insbesondere eines Faserverbundformteils, nach Patentanspruch 1. Bevorzugte Ausführungsformen des erfindungsgemäßen Verfahrens werden in den Patentansprüchen 2 bis 12 beansprucht.

Es besteht auch die Möglichkeit, zur Erzeugung eines Halbzeugs für die Herstellung eines Verbundformteils, insbesondere eines Faserverbundformteils, ein höherschmelzendes Verstärkungsmaterial, insbesondere höherschmelzende Verstärkungsfasern mit niedrigerschmelzenden Fasern aus thermoplastischem Kunststoff zu einem Laminat zu kombinieren, wobei die niedrigerschmelzenden Fasern ersponnen werden und mit einer Fasertemperatur T_{F} mit dem höherschmelzenden Verstärkungsmaterial, insbesondere mit den höherschmelzenden Verstärkungsfasern zu dem das Halbzeug bildenden Laminat kombiniert werden, wobei die Fasertemperatur T_{F} in einem Temperaturbereich zwischen einer Temperatur von 25 °C unterhalb der Wärmeformbeständigkeitstemperatur Tw bis 55 °C oberhalb der Wärmeformbeständigkeitstemperatur Tw des thermoplastischen Kunststoffes der niedrigerschmelzenden Fasern liegt. Es gilt somit: T_{W} - 25 °C ≤ T_{F} ≤ T_{W} + 55 °C. Es liegt im Rahmen der Erfindung, dass die Fasertemperatur T_{F} geringer ist als die Schmelztemperatur des thermoplastischen Kunststoffes der niedrigerschmelzenden Fasern. - Es liegt weiterhin im Rahmen der Erfindung, dass die niedrigerschmelzenden Fasern ersponnen werden und nach dem Erspinnen mit einer Faserstärke < 10 den, vorzugsweise < 3 den und besonders bevorzugt < 1,5 den und mit der Fasertemperatur T_{F} mit dem höherschmelzenden Verstärkungsmaterial, insbesondere mit den höherschmelzenden Verstärkungsfasern, zu dem das Halbzeug bildenden Laminat kombiniert werden.

Höherschmelzend meint im Rahmen der Erfindung, dass die höherschmelzende Komponente einen höheren Schmelzpunkt hat als die niedrigerschmelzende Komponente, wobei die beiden Schmelzpunkte unter gleichen äußeren Bedingungen gemessen werden. Höherschmelzendes Verstärkungsmaterial umfasst im Rahmen der Erfindung auch nichtschmelzendes Verstärkungsmaterial und dementsprechend umfasst der Begriff höherschmelzende Verstärkungsfasern im Rahmen der Erfindung auch nichtschmelzende Verstärkungsfasern. - Es empfiehlt sich, dass das Verstärkungsmaterial und insbesondere die Verstärkungsfasern als Gelege und/ oder Gewebe und/oder Geflecht und/oder Gestricke und/oder Gitter oder dergleichen eingesetzt werden. Eine bevorzugte Ausführungsform ist dadurch gekennzeichnet, dass zumindest ein Gelege und/oder zumindest ein Gewebe aus Verstärkungsfasern die zumindest eine Lage aus höherschmelzenden Verstärkungsfasern bildet/bilden. - Als höherschmelzendes Verstärkungsmaterial können im Rahmen der Erfindung auch höherschmelzende Schäume oder Waben eingesetzt werden. Es liegt im Rahmen der Erfindung, dass der Schmelzpunkt des höherschmelzenden Verstärkungsmaterials bzw. der höherschmelzenden Verstärkungsfasern mindestens 1 °C, vorzugsweise mindestens 5 °C höher liegt als der Schmelzpunkt der niedrigerschmelzenden Fasern. Gemäß einer Ausführungsform der Erfindung liegt der Schmelzpunkt des höherschmelzenden Verstärkungsmaterials bzw. der höherschmelzenden Verstärkungsfasern mindestens 20 °C, vorzugsweise mindestens 30 °C und bevorzugt mindestens 50 °C höher als der Schmelzpunkt der niedrigerschmelzenden Fasern.

Die Fasertemperatur T_{F} der niedrigerschmelzenden Fasern liegt bei ihrer Kombination mit dem Verstärkungsmaterial bzw. mit den Verstärkungsfasern in dem dort angegebenen Bereich niedriger als die Wärmeformbeständigkeitstemperatur T_{W} bzw. in dem dort angegebenen Bereich höher als die Wärmeformbeständigkeitstemperatur T_{W} des thermoplastischen Kunststoffes der niedrigerschmelzenden Fasern. Sie kann natürlich auch der Wärmeformbeständigkeitstemperatur T_{W} entsprechen. Die Fasertemperatur T_{F} der niedrigerschmelzenden Fasern bei der Ablage bzw. bei der Kombination mit dem Verstärkungsmaterial kann als Prozesstemperatur bzw. Lufttemperatur bei der Ablage bzw. Kombination der niedrigerschmelzenden Fasern im laufenden Verfahren gemessen werden. Die Wärmeformbeständigkeit bzw. die Wärmeformbeständigkeitstemperatur T_{W} des thermoplastischen Kunststoffes der niedrigerschmelzenden Fasern ist ein Maß für die Temperaturbelastbarkeit dieses thermoplastischen Kunststoffes. Die Wärmeformbeständigkeitstemperatur kann nach DIN EN ISO 75-2:2004, Methode B (Aufheizrate 50 K/h) an einem nicht getemperten Prüfling gemessen werden.

Eine besonders bevorzugte Ausführungsform des erfindungsgemäßen Verfahrens ist dadurch gekennzeichnet, dass die Fasertemperatur T_{F} der niedrigerschmelzenden Fasern bei der Kombination mit dem Verstärkungsmaterial zwischen einer Temperatur T_{F} von 20 °C - bevorzugt 15 °C - unterhalb der Wärmeformbeständigkeitstemperatur T_{W} bis 50 °C - bevorzugt 45 °C - oberhalb der Wärmeformbeständigkeitstemperatur T_{W} des thermoplastischen Kunststoffes der niedrigerschmelzenden Fasern liegt. Wie oben bereits dargelegt, liegt es aber im Rahmen der Erfindung, dass die Fasertemperatur T_{F} unterhalb des Schmelzpunktes des thermoplastischen Kunststoffes der niedrigerschmelzenden Fasern liegt.

Zweckmäßigerweise werden bei dem erfindungsgemäßen Verfahren die niedrigerschmelzenden Fasern nach dem Erspinnen kontinuierlich dem Verstärkungsmaterial bzw. den Verstärkungsfasern zugeführt. Vorzugsweise haben dabei die niedrigerschmelzenden Fasern die Fasertemperatur T_{F} aus der Erhitzung beim Spinnvorgang beibehalten. Es empfiehlt sich also, dass eine Behandlung bzw. Abkühlung der niedrigerschmelzenden Fasern nur insoweit erfolgt, dass die erfindungsgemäße Fasertemperatur T_{F} gemäß Patentanspruch 1 in dem dort angegebenen Bereich liegt. - Es liegt im Rahmen der Erfindung, dass das Verstärkungsmaterial Zwischenräume aufweist bzw. das zwischen den Verstärkungsfasern Zwischenräume gebildet sind und dass während der Kombination der niedrigerschmelzenden Fasern mit dem Verstärkungsmaterial bzw. mit den Verstärkungsfasern die Fasern bzw. die Faserabschnitte der niedrigerschmelzenden Fasern in die Zwischenräume eindringen können. Der Erfindung liegt insoweit die Erkenntnis zugrunde, dass die erfindungsgemäß mit dem Verstärkungsmaterial mit den Verstärkungsfasern kombinierten niedrigerschmelzenden Fasern mit der Fasertemperatur T_{F} ausreichend flexibel bzw. formbar bzw. weich sind, dass sie in die Zwischenräume des Verstärkungsmaterials bzw. zwischen den Verstärkungsfasern problemlos zumindest mit Faserabschnitten eindringen können. Dadurch erfolgt gleichsam eine Verschlaufung des Verstärkungsmaterials bzw. der Verstärkungsfasern mit den niedrigerschmelzenden Fasern. Der Erfindung liegt weiterhin die Erkenntnis zugrunde, dass das auf die vorstehend beschriebene Art und Weise hergestellte Laminat ausreichend stabil und formbeständig bzw. bereits ausreichend konsolidiert ist, dass es ohne spezielle Verfestigungsmaßnahmen unmittelbar der Herstellung des Verbundformteils bzw. des Faserverbundformteils zugeführt werden kann. Es liegt dabei im Rahmen der Erfindung, dass das bereits als Halbzeug einsetzbare Laminat verfestigungsfrei, insbesondere ohne thermische Verfestigung bzw. ohne Kalandrieren und/oder ohne Vernadeln und/ oder ohne Vernähen und/oder ohne Verkleben und/oder ohne chemische Verfestigung der weiteren Verarbeitung zum Verbundformteil bzw. Faserverbundformteil zugeführt wird. Verfestigungsfrei meint dabei insbesondere, dass das Laminat bzw. das Halbzeug grundsätzlich leicht kompaktiert werden kann bzw. mit Kompaktierrollen leicht kompaktiert werden kann, jedoch keiner besonderen Verfestigungsmethode, insbesondere keiner thermischen Verfestigung oder Vernadelung oder Vernähung oder Verklebung unterzogen wird. Der Erfindung liegt insoweit die Erkenntnis zugrunde, dass eine spezielle Verfestigung nicht erforderlich ist, wenn niedrigerschmelzende Fasern mit der erfindungsgemäßen Fasertemperatur T_{F} mit dem Verstärkungsmaterial bzw. mit den Verstärkungsfasern zu dem Laminat bzw. zu dem Halbzeug kombiniert werden.

Erfindungsgemäß bestehen bei dem Verfahren das höherschmelzende Verstärkungsmaterial bzw. die höherschmelzenden Verstärkungsfasern einerseits und die niedrigerschmelzenden Fasern andererseits aus dem gleichen Kunststoff. So können beispielsweise höherschmelzende Polypropylenfasern als Verstärkungsfasern und niedrigerschmelzende Polypropylenfasern als niedrigerschmelzende Fasern zur Herstellung des erfindungsgemäßen Halbzeuges eingesetzt werden. Im Rahmen des erfindungsgemäßen Verfahrens können also beispielsweise höherschmelzende Polypropylenfasern als höherschmelzende Verstärkungsfasern und niedrigerschmelzende Polypropylenfasern als niedrigerschmelzende Fasern verwendet werden.

Zweckmäßigerweise werden die niedrigerschmelzenden Fasern bzw. wird zumindest eine Lage aus niedrigerschmelzenden Fasern in Form eines Vliesstoffes bzw. in Form eines Wirrvlieses eingesetzt. - Es liegt im Rahmen der Erfindung, dass die niedrigerschmelzenden Fasern als Endlosfilamente erzeugt bzw. ersponnen werden. Wie weiter unten noch näher erläutert, werden die niedrigerschmelzenden Fasern nach besonders empfohlener Ausführungsform der Erfindung als Meltblown-Fasern und besonders bevorzugt als Biax-Meltblown-Fasern ersponnen. Die niedrigerschmelzenden Fasern haben dann vorzugsweise einen Faserdurchmesser von 1 bis 10 µm. - Grundsätzlich können die niedrigerschmelzenden Fasern auch als Spinnvlies aus Endlosfilamenten mittels eines Spun-Bond-Verfahrens erzeugt werden. Auch dieses Verfahren wird weiter unten näher erläutert. Gemäß einer anderen Ausführungsvariante können die niedrigerschmelzenden Fasern auch im Rahmen eines Hot-melt-Verfahrens mit Hilfe eines Hot-melt-Blaskopfes hergestellt werden.

Eine empfohlene Ausführungsform der Erfindung zeichnet sich dadurch aus, dass die Lage aus höherschmelzendem Verstärkungsmaterial - insbesondere die Lage aus höherschmelzenden Verstärkungsfasern - zwischen zumindest zwei Lagen und insbesondere zwischen zwei Lagen aus niedrigerschmelzenden Fasern aus thermoplastischem Kunststoff zu dem Laminat angeordnet wird. Nach einer Ausführungsvariante der Erfindung liegt somit ein dreilagiges Laminat vor. Grundsätzlich sind in dem im Rahmen der Erfindung erzeugten Laminat weitere Lagen aus Verstärkungsmaterial/Verstärkungsfasern und/oder aus niedrigerschmelzenden Fasern möglich.

Gegenstand der Erfindung ist ein Verfahren zur Herstellung eines Halbzeugs für die Herstellung eines Verbundformteils, insbesondere eines Faserverbundformteils, wobei ein höherschmelzendes Verstärkungsmaterial, insbesondere höherschmelzende Verstärkungsfasern mit niedrigerschmelzenden Fasern aus thermoplastischem Kunststoff zu einem Laminat kombiniert werden, wobei die niedrigerschmelzenden Fasern ersponnen werden und nach dem Erspinnen mit dem höherschmelzenden Verstärkungsmaterial, insbesondere mit den höherschmelzenden Verstärkungsfasern zu dem das Halbzeug bildenden Laminat kombiniert werden und wobei das höherschmelzende Verstärkungsmaterial bzw. die höherschmelzenden Verstärkungsfasern und die niedrigerschmelzenden Fasern aus dem gleichen Kunststoff bestehen. - Zweckmäßigerweise werden die niedrigerschmelzenden Fasern nach dem Erspinnen mit einer Faserstärke < 10 den, vorzugsweise < 3 den und bevorzugt < 1,5 den mit dem höherschmelzenden Verstärkungsmaterial, insbesondere mit den höherschmelzenden Verstärkungsfasern, zu dem das Halbzeug bildenden Laminat kombiniert.

Das höherschmelzende Verstärkungsmaterial bzw. die höherschmelzenden Verstärkungsfasern als auch die niedrigerschmelzenden Fasern können aus dem gleichen Polyolefin oder aus dem gleichen Polyester oder aus dem gleichen Polyamid bestehen. So können sowohl die höherschmelzenden Verstärkungsfasern als auch die niedrigerschmelzenden Fasern aus Polypropylen oder aus Polyethylen oder aus Polyethylenterephthalat (PET) oder aus Polybutylenterephthalat (PBT) bestehen.

Bei dem erfindungsgemäßen Einsatz gleicher Kunststoffe kann der höhere Schmelzpunkt von höherschmelzenden Verstärkungsfasern dadurch erreicht werden, dass die höherschmelzenden Verstärkungsfasern eine höhere Kristallinität aufweisen als die niedrigerschmelzenden Fasern. Die höherschmelzenden Verstärkungsfasern können stärker verstreckt sein als die niedrigerschmelzenden Fasern. - Der niedrigere Schmelzpunkt der niedrigerschmelzenden Fasern kann aber auch durch Zusätze - beispielsweise durch den Zusatz eines Co-Polymers mit niedrigerem Schmelzpunkt - realisiert werden.

Der Schmelzpunkt des höherschmelzenden Verstärkungsmaterials bzw. der höherschmelzenden Verstärkungsfasern liegt vorzugsweise mindestens 1 °C, bevorzugt mindestens 5 °C, höher als der Schmelzpunkt der niedrigerschmelzenden Fasern. Gemäß einer Ausführungsvariante beträgt die Schmelzpunktdifferenz mindestens 10 °C bzw. mindestens 20 °C.

Der erfindungsgemäße Einsatz des gleichen Kunststoffes bei dem höherschmelzenden Verstärkungsmaterial einerseits und bei den niedrigerschmelzenden Fasern andererseits zeichnet sich in vorteilhafter Weise durch ein problemloses Recycling aus. Bei der Wiederverwertung von aus den erfindungsgemäßen Halbzeug erzeugten Verbundformteilen bzw. Faserverbundformteilen ist eine aufwendige Trennung der einzelnen Komponenten nicht erforderlich. Das ist vor allem für Verbundformteile der Automobilindustrie sehr vorteilhaft, da hier eine hohe Recyclingquote gefordert wird. Weiterhin können die ersponnenen niedrigerschmelzenden Fasern auf einfache und vor allem effektive Weise mit dem höherschmelzenden Verstärkungsmaterial bzw. mit den höherschmelzenden Verstärkungsfasern kombiniert werden, so dass sich relativ stabile Laminate ergeben, für die sehr energieintensive Verfestigungsmaßnahmen grundsätzlich nicht erforderlich sind. Es liegt im Rahmen der Erfindung, dass das Halbzeug verfestigungsfrei, insbesondere ohne Kalandrieren und/oder ohne Vernadeln und/oder ohne Vernähen und/oder ohne thermisches Bonden mit Heißluft und/oder ohne Verkleben und/oder ohne chemische Verfestigung der weiteren Verarbeitung zum Verbundformteil, insbesondere zum Faserverbundformteil, zugeführt wird.

Nichtsdestoweniger liegt es aber auch im Rahmen der Erfindung, dass bei dieser Ausführungsform das Laminat aus der zumindest einen Lage aus höherschmelzendem Verstärkungsmaterial - insbesondere aus höherschmelzenden Verstärkungsfasern - und der zumindest einen Lage aus niedrigerschmelzenden Fasern vor der Weiterverarbeitung zum Verbundformteil bzw. zum Faserverbundformteil verfestigt wird. Verfestigung des Laminates meint dabei insbesondere die Verbindung und/oder die Verschlaufung der höherschmelzenden und niedrigerschmelzenden Komponenten. Vorzugsweise wird das Laminat mittels zumindest einer Verfestigungsart aus der Gruppe "mechanisches Vernadeln, Wasserstrahlverfestigen, Kalandrieren, Thermobonden mit Heißluft, Verkleben, chemisches Verbinden", verfestigt. Verkleben meint hier insbesondere Verkleben mittels Hot-melt, insbesondere aus der gleichen Stoffgruppe wie das Verstärkungsmaterial und die niedrigerschmelzenden Fasern. Aufgrund der zusätzlichen Verfestigung ist das Laminat besonders leicht handhabbar und zeichnet sich durch eine gute Drapierbarkeit aus, so dass das Laminat problemlos auch als Rollenware eingesetzt werden kann.

Eine Ausführungsform, der im Rahmen der Erfindung besondere Bedeutung zukommt, ist dadurch gekennzeichnet, dass die zumindest eine Lage aus niedrigerschmelzenden Fasern aus thermoplastischem Kunststoff ein Vliesstoff ist. Es liegt im Rahmen der Erfindung, dass es sich bei dem Vliesstoff um ein Wirrvlies handelt. Zweckmäßigerweise sind in dem erfindungsgemäßen Laminat alle Lagen aus niedrigerschmelzenden Fasern aus thermoplastischem Kunststoff Vliesstoffe. - Nach einer besonders empfohlenen Ausführungsform der Erfindung handelt es sich bei einem Vliesstoff aus niedrigerschmelzenden Fasern um ein Spinnvlies aus Endlosfilamenten.

Es liegt im Rahmen der Erfindung, dass ein solches Spinnvlies aus Endlosfilamenten mittels eines Spun-Bond-Verfahrens hergestellt wird. Dabei werden Endlosfilamente aus thermoplastischem Kunststoff aus einer Spinnerette ersponnen und daraufhin in einer Kühlkammer gekühlt. Zweckmäßigerweise werden diese gekühlten Endlosfilamente anschließend in eine Verstreckeinheit eingeführt und bevorzugt schließlich auf einem Förderband bzw. Ablagesiebband abgelegt. Empfohlenermaßen weisen die Endlosfilamente des Spinnvlieses einen Faserdurchmesser von 10 bis 35 µm auf und vorzugsweise ist der Faserdurchmesser de Endlosfilamente größer als 10 µm bzw. deutlich größer als 10 µm. Zweckmäßigerweise beträgt der Schmelzflussindex (MFI) des zur Herstellung eines Spinnvlieses eingesetzten Polypropylens 10 bis 100 g/10 min. Der Schmelzflussindex (MFI) wird im Rahmen der Erfindung nach EN ISO 1133 bei einer Prüftemperatur von 230 °C und bei einer Nennmasse von 2,16 kg gemessen. - Gemäß einer bevorzugten Ausführungsform der Erfindung ist eine Lage aus höherschmelzendem Verstärkungsmaterial - insbesondere aus höherschmelzenden Verstärkungsfasern - zwischen zwei Spinnvliesen aus Endlosfilamenten aus thermoplastischem Kunststoff angeordnet.

Eine im Rahmen des erfindungsgemäßen Verfahrens besonders bevorzugte Ausführungsform ist dadurch gekennzeichnet, dass als Vliesstoff ein Meltblown-Vlies eingesetzt wird und vorzugsweise ein Biax-Meltblown-Vlies eingesetzt wird. Meltblown-Vliese und vor allem Biax-Meltblown-Vliese haben sich im Rahmen der Erfindung besonders bewährt. Meltblown-Vliese werden mit Meltblown-Anlagen hergestellt, die einen Düsenkopf bzw. Meltblown-Blaskopf aufweisen, der mit einer Vielzahl von in zumindest einer Reihe angeordneten Düsenöffnungen ausgestattet ist. Aus diesen Düsenöffnungen wird die Kunststoffschmelze bzw. werden die schmelzflüssigen Kunststofffilamente in einen sehr schnellen Blasluftstrom extrudiert. Dadurch wird die Schmelze in feine Fasern umgewandelt, verfestigt und die Fasern werden dann auf einer Ablage - insbesondere auf einem Ablagesiebband - zum feinfaserigen Meltblown-Vlies abgelegt. Beim herkömmlichen Meltblown-Verfahren wird der Vorhang der extrudierten Kunststofffilamente von der Seite bzw. von gegenüberliegenden Seiten mit einem flächigen Blasluftstrom bzw. mit flächigen Blasluftströmen beaufschlagt. Beim Biax-Meltblown-Verfahren wird im Unterschied dazu jede einzelne Düsenöffnung bzw. jedes einzelne extrudierte Kunststofffilament mit einem separaten Blasluftstrom bzw. mit einem das Filament mantelförmig umgebenden Blasluftstrom beaufschlagt. Die mit dem Biax-Meltblown-Verfahren hergestellten Biax-Meltblown-Vliese haben sich im Rahmen der Erfindung ganz besonders bewährt. Die bei dem erfindungsgemäßen Verfahren eingesetzten Meltblown-Vliese bzw. Biax-Meltblown-Vliese weisen Fasern mit einem Faserdurchmesser von zweckmäßigerweise 1 bis 10 µm auf. Zur Herstellung der Meltblown-Vliese bzw. Biax-Meltblown-Vliese wird beispielsweise ein Polypropylen mit einem mit einem Schmelzflussindex (MFI) von 75 bis 2.500 g/10 min eingesetzt. Ganz besonders bewährt hat sich ein Schmelzflussindex von 100 bis 150 g/10 min. Nach besonders empfohlener Ausführungsform des erfindungsgemäßen Verfahrens wird eine Lage aus höherschmelzendem Verstärkungsmaterial bzw. aus höherschmelzenden Verstärkungsfasern eingesetzt, die zwischen bzw. die unmittelbar zwischen zwei Meltblown-Vliesen angeordnet ist und bevorzugt zwischen zwei Biax-Meltblown-Vliesen angeordnet ist. - Grundsätzlich können die niedrigerschmelzenden Fasern auch im Rahmen eines Hot-melt-Verfahrens mit Hilfe eines Hot-melt-Blaskopfes erzeugt werden.

Gemäß einer bewährten Ausführungsform des erfindungsgemäßen Verfahrens werden niedrigerschmelzende Fasern aus zumindest einem Polyolefin, vorzugsweise aus Polypropylen und/oder Polyethylen eingesetzt. Die niedrigerschmelzenden Fasern können grundsätzlich aber auch aus anderen Thermoplasten bestehen, insbesondere auch aus einem Polyester, beispielsweise aus Polyethylenterephthalat (PET) oder aus Polyamid (PA).

Die höherschmelzenden Verstärkungsfasern können als Kurzfasern und/ oder Langfasern eingesetzt werden. Es liegt im Rahmen der Erfindung, dass die Lage aus den höherschmelzenden Verstärkungsfasern ein Gelege und/oder ein Gewebe und/oder ein Geflecht und/oder eine Gestrick ist. Besonders bewährt haben sich Gelege und Gewebe. Nach einer anderen bevorzugten Ausführungsform der Erfindung ist die Lage aus den höherschmelzenden Verstärkungsfasern ein Vliesstoff aus höherschmelzenden Verstärkungsfasern bzw. aus höherschmelzenden Kunststofffasern. Es hat sich im Übrigen bewährt, dass die Verstärkungsfasern mit einem Imprägniermittel bzw. mit einem Haftvermittler versetzt werden, um eine bessere Verbindung bzw. Haftung mit dem geschmolzenen thermoplastischen Kunststoff zu erreichen.

Gemäß einer Ausführungsvariante wird die zumindest eine Lage aus Verstärkungsfasern als Rollenware mit der zumindest einen Lage aus niedrigerschmelzenden Fasern kombiniert oder aber die Verstärkungsfasern werden beispielsweise im Airlaid-Verfahren mit der zumindest einen Lage aus niedrigerschmelzenden Fasern kombiniert. Die zumindest zwei Lagen können auch kontinuierlich als Rollenware kombiniert werden oder diskontinuierlich als zweidimensionale Flächengebilde aufeinander aufgebracht werden. Es liegt im Rahmen der Erfindung, dass das erfindungsgemäß erzeugte Laminat zu einer Rolle aufgerollt werden kann und somit gleichsam als Rollenware weiterverwendet werden kann. Das wird durch die flexiblen Eigenschaften und durch die gute Drapierbarkeit des erfindungsgemäß hergestellten Laminates ermöglicht.

Nachfolgend wird die erfindungsgemäße Herstellung eines Verbundformteils, insbesondere eines Faserverbundformteils erläutert. Bei dem Verbundformteil bzw. Faserverbundformteil ist höherschmelzendes Verstärkungsmaterial bzw. sind höherschmelzende Verstärkungsfasern in einer Matrix aus thermoplastischem Kunststoff eingebettet. Zur Herstellung des Verbundformteils bzw. des Faserverbundformteils wird das Laminat bzw. das erfindungsgemäß hergestellte Halbzeug mit Wärme und/oder Druck beaufschlagt, so dass die niedrigerschmelzenden Fasern aus dem thermoplastischen Kunststoff schmelzen und das nicht aufgeschmolzene Verstärkungsmaterial bzw. die nicht aufgeschmolzenen Verstärkungsfasern von der thermoplastischen Schmelze imprägniert werden bzw. in der Matrix aus dem thermoplastischen Kunststoff eingebettet werden. - Die Beaufschlagung des Laminates bzw. des Halbzeuges mit Wärme und/oder Druck kann dabei "Inline" oder "Offline" erfolgen. Es liegt im Rahmen der Erfindung, dass bei der Beaufschlagung mit Wärme und/oder Druck die Erwärmungstemperatur so gewählt bzw. eingestellt wird, dass lediglich die niedrigerschmelzenden Fasern schmelzen oder dass im Wesentlichen lediglich die niedrigerschmelzenden Fasern schmelzen. Es versteht sich, dass nach dem Aufbringen von Wärme und/oder Druck bzw. nach dem Formen des Verbundformteils/Faserverbundformteils ein Abkühlen der Matrix aus dem thermoplastischen Kunststoff mit dem eingebetteten Verstärkungsmaterial bzw. mit den eingebetteten Verstärkungsfasern stattfindet. Mit dem erfindungsgemäßen Verfahren wird vorzugsweise ein Verbundformteil bzw. Faserverbundformteil in Leichtbauweise erzeugt.

Für die Beaufschlagung mit Wärme bzw. Hitze und/oder Druck wird das Laminat bzw. das erfindungsgemäß erzeugte Halbzeug zweckmäßigerweise in ein Presswerkzeug eingebracht und dort bevorzugt unter Wärmeeinwirkung und Druckeinwirkung verformt. Die Imprägnierung des Verstärkungsmaterials bzw. der Verstärkungsfasern mit der thermoplastischen Schmelze und die Einbettung des Verstärkungsmaterials bzw. der Verstärkungsfasern in die Matrix aus thermoplastischem Kunststoff soll im Rahmen der Erfindung möglichst vollständig und unter Minimierung von Lufteinschlüssen erfolgen.

Eine ganz besonders bevorzugte Ausführungsform des erfindungsgemäßen Verfahrens zeichnet sich dadurch aus, dass das erfindungsgemäß erzeugte Laminat/Halbzeug durch Beaufschlagung mit Wärme und/oder Druck unmittelbar im Zuge eines Thermoformprozesses und/oder eines Spritzgießprozesses in ein Verbundformteil bzw. Faserverbundformteil umgewandelt wird. Im Unterschied zu dem eingangs beschriebenen aus der Praxis bekannten Verfahren wird dann also das Laminat/Halbzeug unmittelbar und ohne zwischengeschalteten Aufschmelz- und Erhärtungsprozess zum Endprodukt verarbeitet. Es entfällt also die Herstellung eines zusätzlichen Halbzeuges aus dem Verstärkungsmaterial bzw. aus den Verstärkungsfasern und einer thermoplastischen Matrix und damit wird im Vergleich zu dem bekannten Verfahren ein Verarbeitungsschritt eingespart. - Thermoformprozess meint insbesondere einen Tiefziehprozess. Bei der vorstehend beschriebenen bevorzugten Ausführungsform kann das erfindungsgemäß hergestellte Laminat/Halbzeug also unmittelbar tiefgezogen werden. Aufgrund der guten Handhabbarkeit und guten Drapierbarkeit des Laminates/Halbzeuges können erfindungsgemäß problemlos dreidimensionale bzw. mehrdimensionale Formteile hergestellt werden.

Nach einer anderen Ausführungsform des erfindungsgemäßen Verfahrens wird das Laminat/Halbzeug in einem ersten Schritt mit Wärme und/oder Druck beaufschlagt und dabei wird ein weiteres bzw. zweites Halbzeug mit einer Matrix aus thermoplastischem Kunststoff und darin eingebettetem Verstärkungsmaterial bzw. darin eingebetteten Verstärkungsfasern gebildet. Dieses weitere bzw. zweite Halbzeug aus thermoplastischer Matrix und eingebettetem Verstärkungsmaterial bzw. eingebetteten Verstärkungsfasern wird dann erst später bzw. in einem zweiten Schritt durch Beaufschlagung mit Wärme und/oder Druck im Zuge eines Thermoformprozesses und/oder eines Spritzgießprozesses in ein Verbundformteil bzw. in ein Faserverbundformteil umgewandelt. Hier wird also wie bei dem aus der Praxis bekannten Verfahren in einem zusätzlichen Schritt zunächst ein weiteres Halbzeug hergestellt, das dann später zu dem Endprodukt verarbeitet wird, beispielsweise durch Tiefziehen zu einem dreidimensionalen bzw. mehrdimensionalen Formteil. Zweckmäßigerweise wird das weitere bzw. zweite Halbzeug aus der thermoplastischen Matrix und dem eingebetteten Verstärkungsmaterial in Form von Platten hergestellt.

Zur Herstellung eines Verbundformteils, insbesondere eine Faserverbundformteils kann ein Halbzeug mit in einer Matrix aus thermoplastischem Kunststoff eingebettetem Verstärkungsmaterial bzw. eingebetteten Verstärkungsfasern eingesetzt werden, wobei zumindest eine Lage aus höherschmelzendem Verstärkungsmaterial - insbesondere aus höherschmelzenden Verstärkungsfasern - mit zumindest einer Lage aus niedrigerschmelzenden Fasern aus thermoplastischem Kunststoff zu einem Laminat kombiniert wird. Das Laminat bildet das Halbzeug, aus dem das Verbundformteil bzw. Faserverbundformteil herstellbar ist. Es wird unterschieden zwischen dem hier beschriebenen ersten Halbzeug (Laminat) und dem optionalen weiter oben beschriebenen weiteren bzw. zweiten Halbzeug (Halbzeug aus thermoplastischer Matrix mit eingebettetem Verstärkungsmaterial). Der Erfindung liegt die Erkenntnis zugrunde, dass das Halbzeug in Form des Laminates relativ einfach handhabbar ist und vor allem aufgrund seiner guten Drapierbarkeit auf Rollen aufwickelbar und als Rollenware einsetzbar ist. Insbesondere ein Laminat mit zumindest einem Meltblown-Vlies als niedrigerschmelzender Komponente kann aufgrund der guten Haftung oftmals ohne zusätzliche Verfestigung problemlos gehandhabt werden und unmittelbar zum Verbundformteil/Faserverbundformteil weiterverarbeitet werden oder beispielsweise zu einer Rolle aufgewickelt werden.

Nach dem oben beschriebenen erfindungsgemäßen Verfahren ist, ein Verbundformteil, insbesondere ein Faserverbundformteil, herstellbar, bei dem ein höherschmelzendes Verstärkungsmaterial - insbesondere höherschmelzende Verstärkungsfasern - in einer Matrix aus niedrigerschmelzendem thermoplastischem Kunststoff eingebettet ist/sind und wobei die Matrix aus niedrigerschmelzenden Fasern aus dem thermoplastischen Kunststoff erzeugt worden ist.

Der Erfindung liegt zunächst die Erkenntnis zugrunde, dass die nach den erfindungsgemäßen Verfahren hergestellten Halbzeuge sich durch eine besonders effektive bzw. feste Verbindung der sie bildenden Schichten auszeichnen. Diese Halbzeuge stellen überraschend formstabile Aggregate dar, die ohne weitere Verfestigung oder zumindest ohne energieintensive Verfestigungsmaßnahmen weiterverarbeitet bzw. weiter gehandhabt werden können. Die erfindungsgemäß erzeugten Laminate bzw. Halbzeuge zeichnen sich durch eine exzellente Handhabbarkeit und insbesondere Drapierbarkeit aus. Die Halbzeuge können zweckmäßigerweise unmittelbar zum Verbundformteil bzw. zum Faserverbundformteil weiterverarbeitet werden oder direkt auf Rollen aufgewickelt werden. Insoweit zeichnet sich die Erfindung durch geringen Aufwand und geringe Kosten aus. Die Halbzeuge können problemlos als flexible Rollenware eingesetzt werden und dreidimensionale bzw. mehrdimensionale Formteile sind auf einfache Weise herstellbar. Der Erfindung liegt weiterhin die Erkenntnis zugrunde, dass bei Verwirklichung der erfindungsgemäßen Maßnahmen eine optimale Imprägnierung bzw. Benetzung der Verstärkungsfasern mit der Schmelze aus dem thermoplastischen Kunststoff möglich ist. Lufteinschlüsse in der thermoplastischen Matrix können vermieden werden oder zumindest weitgehend vermieden werden. Bei dem erfindungsgemäßen Verfahren kann die Imprägnierung bzw. Benetzung und die Formteilformung auf einfache Weise in einem einzigen Presswerkzeug erfolgen. Die erfindungsgemäß erzeugten Verbundformteile bzw. Faserverbundformteile zeichnen sich auch durch hervorragende mechanische Eigenschaften aus. Weiterhin ist darauf hinzuweisen, dass die erfindungsgemäß hergestellten Verbundformteile bzw. Faserverbundformteile auf einfache und wenig aufwendige Weise recycelt werden können. Insgesamt zeichnet sich das erfindungsgemäße Verfahren durch geringe Kosten und geringen Aufwand aus.

Im Folgenden wird die Erfindung anhand einer lediglich ein Ausführungsbeispiel darstellenden Zeichnung näher erläutert. Es zeigen in schematischer Darstellung:
- Fig. 1: schematisch die Erzeugung eines ein erfindungsgemäßes Halbzeug bildenden Laminates,
- Fig. 2: eine Vorrichtung zur Durchführung des erfindungsgemäßen Verfahrens,
- Fig. 3: einen Schnitt durch ein erfindungsgemäß hergestelltes Faserverbundformteil und
- Fig. 4: ein erfindungsgemäß hergestelltes Faserverbundformteil in perspektivischer Ansicht.

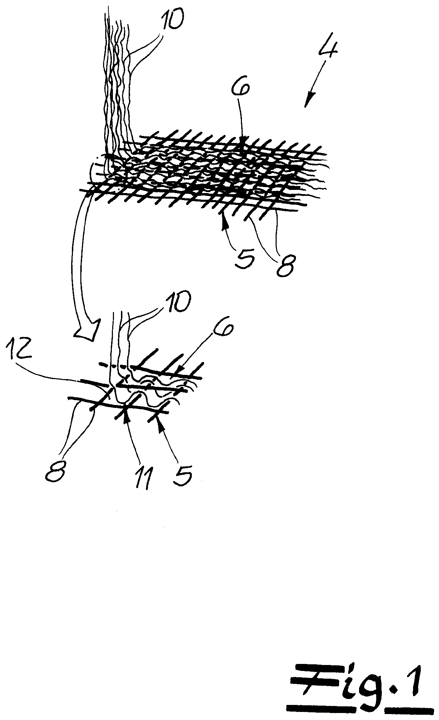

Fig. 1 zeigt ganz schematisch die Herstellung eines ein erfindungsgemäßes Halbzeug bildenden Laminates 4. Das Laminat 4 besteht hier aus einer Lage von höherschmelzenden Verstärkungsfasern in Form eines nicht von der Erfindung erfassten Glasfasergewebes 5 aus Glasfasern 8. Niedriger schmelzende Fasern 10 werden bevorzugt und im Ausführungsbeispiel mittels eines Biax-Meltblown-Verfahrens hergestellt. Es mag sich hierbei um niedrigerschmelzende Polypropylenfasern handeln, die mit den Glasfasern 8 bzw. mit dem Glasfasergewebe 5 kombiniert werden. Zweckmäßigerweise und im Ausführungsbeispiel wird ein Biax-Meltblown-Vlies 6 auf dem Glasfasergewebe 5 abgelegt. Erfindungsgemäß haben die niedrigerschmelzenden Fasern 10 bzw. die Polypropylenfasern eine Fasertemperatur T_{F} im Bereich der Wärmeformbeständigkeitstemperatur Tw des Polypropylens. Aus Fig. 1 ist ersichtlich, dass die mit den Glasfasern 8 bzw. mit dem Glasfasergewebe 5 kombinierten niedrigerschmelzenden Fasern 10 aufgrund ihrer Fasertemperatur T_{F} so weich bzw. flexibel und formbar sind, dass sie mit Faserabschnitten 11 in zwischen den Glasfasern 8 des Glasfasergewebes 5 gebildete

Zwischenräume 12 eindringen. Auf diese Weise ergibt sich eine effektive Verschlaufung bzw. Verbindung zwischen den höherschmelzenden Glasfasern 8 und den niedrigerschmelzenden Fasern 10. Das gebildete Laminat 4 kann grundsätzlich ohne spezielle Verfestigung der Weiterverarbeitung zum Verbundformteil bzw. zum Faserverbundformteil 7 zugeführt werden.

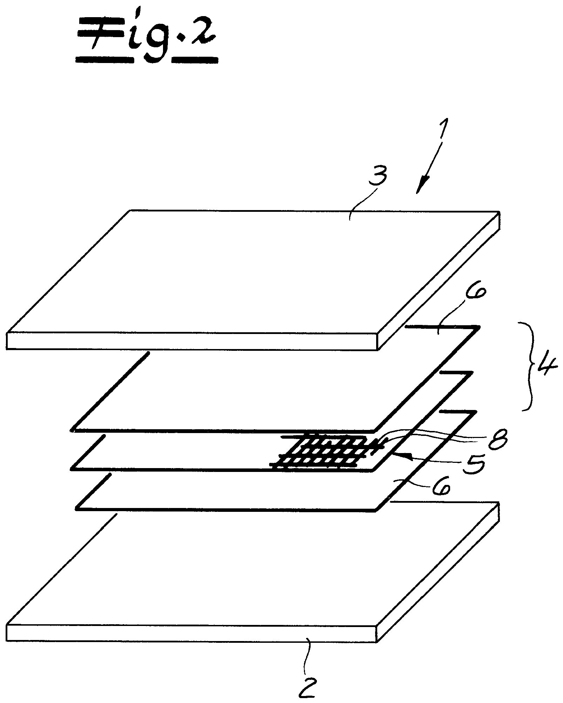

Die Fig. 2 zeigt sehr schematisch ein Presswerkzeug 1 mit zwei Pressplatten 2, 3. Zwischen den Pressplatten 2, 3 wird im Ausführungsbeispiel ein dreilagiges Laminat 4 angeordnet. Dieses Laminat 4 weist eine mittige Lage aus höherschmelzenden Verstärkungsfasern in Form eines Glasfasergewebes 5 auf. Dieses Glasfasergewebe 5 ist zwischen zwei Biax-Meltblown-Vliesen 6 aus Polypropylenfasern angeordnet. Beim Zusammenpressen der Pressplatten 2, 3 wird das Laminat mit Wärme und Druck beaufschlagt, so dass die niedrigerschmelzenden Polypropylenfasern aufschmelzen. Die Erwärmungstemperatur wird so gewählt, dass lediglich die Polypropylenfasern schmelzen und die Glasfasern 8 des Glasfasergewebes 5 dagegen nicht aufgeschmolzen werden. Vielmehr werden die Glasfasern 8 von der thermoplastischen Polypropylenschmelze imprägniert bzw. benetzt und auf diese Weise werden die Glasfasern 8 in einer Matrix aus thermoplastischem Kunststoff (PP) eingebettet. Auf die vorstehend beschriebene Weise kann nach bevorzugter Ausführungsform der Erfindung unmittelbar ein Faserverbundformteil 7 hergestellt werden. Die Fig. 2 zeigt nur sehr schematisch ein einfaches Presswerkzeug 1. Grundsätzlich können im Rahmen der Erfindung mit speziellen Presswerkzeugen auf einfache Weise dreidimensionale bzw. mehrdimensionale Formteile mit komplizierten Strukturen hergestellt werden. Dazu trägt die flexible Handhabbarkeit und die gute Drapierbarkeit der Laminate 4 bei.

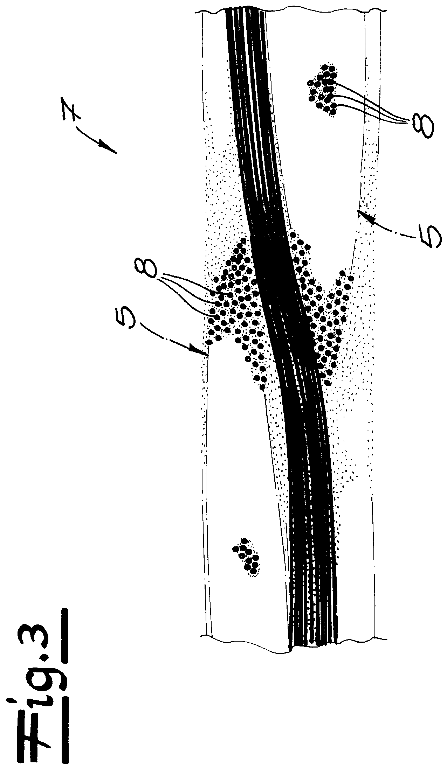

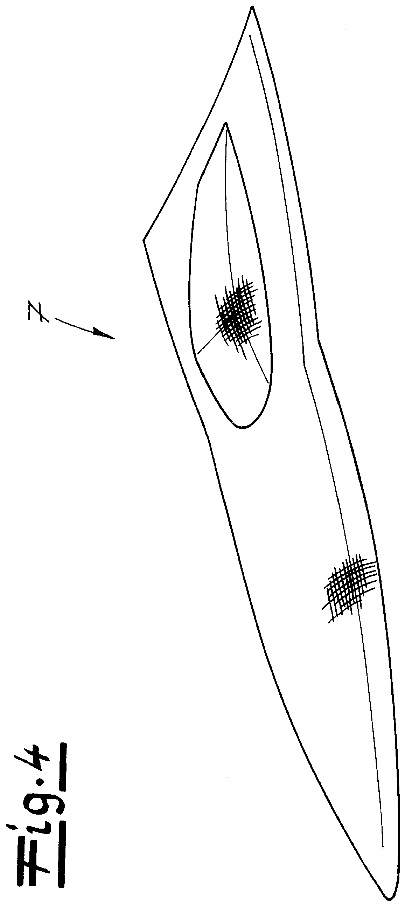

Die Fig. 3 zeigt einen Schnitt durch ein mit dem erfindungsgemäßen Verfahren hergestelltes Faserverbundformteil 7 nach der Abkühlung. Es ist erkennbar, dass die Glasfasern 8 des Glasfasergewebes 5 vollständig in die thermoplastische Polypropylen-Matrix eingebettet sind. Störende Lufteinschlüsse sind nicht zu beobachten und sie können bei Realisierung der erfindungsgemäßen Maßnahmen auf einfache Weise vermieden werden. Die auf diese Weise erfindungsgemäß hergestellten Faserverbundformteile 7 weisen optimale mechanische Eigenschaften auf. - In der Fig. 4 ist im Übrigen ein weiteres erfindungsgemäß hergestelltes Faserverbundformteil 7 mit mehrdimensionaler Struktur dargestellt. Mehrdimensionale Strukturen lassen sich im Rahmen des erfindungsgemäßen Verfahrens einfach und problemlos verwirklichen.

## Patentansprüche

1. Verfahren zur Erzeugung eines Halbzeugs für die Herstellung eines Verbundformteils, insbesondere eines Faserverbundformteils (7), wobei ein höherschmelzendes Verstärkungsmaterial, insbesondere höherschmelzende Verstärkungsfasern mit niedrigerschmelzenden Fasern (10) aus thermoplastischem Kunststoff zu einem Laminat (4) kombiniert werden, wobei die niedrigerschmelzenden Fasern (10) ersponnen werden und nach dem Erspinnen mit dem höherschmelzenden Verstärkungsmaterial, insbesondere mit den höherschmelzenden Verstärkungsfasern zu dem das Halbzeug bildenden Laminat (4) kombiniert werden,
**dadurch gekennzeichnet, dass**
das höherschmelzende Verstärkungsmaterial bzw. die höherschmelzenden Verstärkungsfasern und die niedrigerschmelzenden Fasern (10) aus dem gleichen Kunststoff bestehen.

2. Verfahren nach Anspruch 1, wobei das Laminat (4) mittels zumindest einer Verfestigungsart aus der Gruppe "mechanisches Vernadeln, Wasserstrahlverfestigen, Kalandrieren, Thermobonden mit Heißluft, Verkleben, chemisches Verbinden" verfestigt wird.

3. Verfahren nach einem der Ansprüche 1 oder 2, wobei das Laminat (4) bzw. das verfestigte Laminat (4) in einem ersten Schritt mit Wärme und/oder Druck beaufschlagt wird und dabei ein weiteres Halbzeug mit einer Matrix aus thermoplastischem Kunststoff und darin eingebettetem Verstärkungsmaterial bzw. darin eingebetteten Verstärkungsfasern gebildet wird und in einem zweiten Schritt zum Verbundformteil bzw. Faserverbundformteil (7) weiterverarbeitet wird.

4. Verfahren nach einem der Ansprüche 1 bis 3, wobei die niedrigerschmelzenden Fasern (10) nach dem Erspinnen mit einer Faserstärke < 1,11 tex, bevorzugt < 0,33 tex und besonders bevorzugt < 0,17 tex mit dem höherschmelzenden Verstärkungsmaterial, insbesondere mit den höherschmelzenden Verstärkungsfasern, zu dem das Halbzeug bildenden Laminat (4) kombiniert werden.

5. Verfahren nach einem der Ansprüche 1 bis 4, wobei die niedrigerschmelzenden Fasern (10) in Form eines Wirrvlieses bzw. in Form eines Vliesstoffes mit dem Verstärkungsmaterial bzw. mit den Verstärkungsfasern kombiniert werden.

6. Verfahren nach einem der Ansprüche 1 bis 5, wobei die niedrigerschmelzenden Fasern (10) als Endlosfilamente erzeugt bzw. ersponnen werden.

7. Verfahren nach einem der Ansprüche 1 bis 6, wobei die niedrigerschmelzenden Fasern (10) als Meltblown-Fasern und besonders bevorzugt als Biax-Meltblown-Fasern ersponnen werden.

8. Verfahren nach einem der Ansprüche 1 bis 7, wobei der Schmelzpunkt des höherschmelzenden Verstärkungsmaterials bzw. der höherschmelzenden Verstärkungsfasern mindestens 1°C, vorzugsweise mindestens 5°C höher liegt als der Schmelzpunkt der niedrigerschmelzenden Fasern (10).

9. Verfahren nach einem der Ansprüche 1 bis 8, wobei höherschmelzende Verstärkungsfasern zumindest einer Faserart aus der Gruppe "Glasfasern (8), Aramidfasern, Kohlenstofffasern, Metallfasern, Fasern aus thermoplastischem Kunststoff" eingesetzt werden.

10. Verfahren nach einem der Ansprüche 1 bis 9, wobei eine Lage aus dem höherschmelzenden Verstärkungsmaterial - insbesondere aus höherschmelzenden Verstärkungsfasern - zwischen zwei Lagen aus niedrigerschmelzenden Fasern (10) zu dem Laminat (4) angeordnet wird.

11. Verfahren zur Herstellung eines Verbundformteils (7), insbesondere eines Faserverbundformteils, wobei ein Halbzeug - hergestellt nach einem der Ansprüche 1 bis 10 - mit Wärme und/oder Druck beaufschlagt wird, so dass die niedrigerschmelzenden Fasern (10) schmelzen und das Verstärkungsmaterial - insbesondere die Verstärkungsfasern - von der Schmelze imprägniert wird/werden bzw. in der Matrix aus thermoplastischem Kunststoff eingebettet wird/werden.

12. Verfahren nach Anspruch 11, wobei das Halbzeug durch Beaufschlagung mit Wärme und/oder Druck im Zuge eines Thermoformprozesses und/oder eines Spritzgießprozesses in das Verbundformteil bzw. Faserverbundformteil (7) umgewandelt wird.

## Claims

1. A method for producing a semi-finished product for the manufacture of a composite moulded part, in particular a fibre composite moulded part (7), wherein a higher-melting reinforcing material, in particular higher-melting reinforcing fibres are combined with lower-melting fibres (10) of thermoplastic material to form a laminate (4), wherein the lower-melting fibres (10) are spun and after spinning are combined with the higher-melting reinforcing material, in particular with the higher-melting reinforcing fibres to form the laminate (4) forming the semi-finished product,
**characterized in that**
the higher-melting reinforcing material or the higher-melting reinforcing fibres and the lower-melting fibres (10) consist of the same plastic.

2. The method according to claim 1, wherein the laminate (4) is consolidated by means of at least one type of consolidation from the group "mechanical needling, water jet consolidation, calendering, thermobonding with hot air, adhesion, chemical bonding".

3. The method according to one of claims 1 or 2, wherein the laminate (4) or the consolidated laminate (4) is exposed to heat and/or pressure in a first step and a further semi-finished product having a matrix of thermoplastic material or reinforcing fibres embedded therein is formed and is further processed in a second step to form a composite moulded part or fibre composite moulded part (7).

4. The method according to one of claims 1 to 3, wherein the lower-melting fibres (10) after spinning having a fibre thickness of < 1.11 tex, preferably < 0.33 tex and particularly preferably < 0.17 tex are combined with the higher-melting reinforcing material, in particular with the higher-melting reinforcing fibres, to form the laminate (4) forming the semi-finished product.

5. The method according to one of claims 1 to 4, wherein the lower-melting fibres (10) in the form of a random nonwoven or in the form of a nonwoven fabric are combined with the reinforcing material or with the reinforcing fibres.

6. The method according to one of claims 1 to 5, wherein the lower-melting fibres (10) are produced or spun as continuous filaments.

7. The method according to one of claims 1 to 6, wherein the lower-melting fibres (10) are spun as meltblown fibres and particularly preferably as biax meltblown fibres.

8. The method according to one of claims 1 to 7, wherein the melting point of the higher-melting reinforcing material or the higher-melting reinforcing fibres is at least 1 °C, preferably at least 5 °C higher than the melting point of the lower-melting fibres (10).

9. The method according to one of claims 1 to 8, wherein higher-melting reinforcing fibres of at least one type of fibre from the group "glass fibres (8), aramid fibres, carbon fibres, metal fibres, fibres of thermoplastic material" are used.

10. The method according to one of claims 1 to 9, wherein a layer of the higher-melting reinforcing material- in particular of higher-melting reinforcing fibres - is arranged between two layers of lower-melting fibres (10) to form the laminate (4).

11. Method for producing a composite moulded part (7), in particular a fibre composite moulded part, wherein a semi-finished product - manufactured according to one of claims 1 to 10, is exposed to heat and/or pressure so that the lower-melting fibres (10) melt and the reinforcing material - in particular the reinforcing fibres - is/are impregnated by the melt or is/are embedded in the matrix of thermoplastic material.

12. The method according to claim 11, wherein the semi-finished product is converted into the composite moulded part or fibre composite moulded part (7) by exposure to heat and/or pressure in the course of a thermoforming process and/or an injection moulding process.

## Revendications

1. Procédé, destiné à créer un produit semi-fini pour la fabrication d'une pièce moulée composite, notamment d'une pièce moulée composite renforcée par fibres (7), une matière de renfort à point de fusion plus élevé, notamment des fibres de renfort à point de fusion plus élevé étant associées avec des fibres de renfort à point de fusion plus bas (10) en matière thermoplastique en un laminé (4), les fibres de renfort à point de fusion plus bas (10) étant filées et après le filage étant associées avec la matière de renfort à point de fusion plus élevé, notamment avec les fibres de renfort à point de fusion plus élevé pour obtenir le laminé (4) formant le produit semi-fini,
**caractérisé en ce que**
la matière de renfort à point de fusion plus élevé, respectivement les fibres de renfort à point de fusion plus élevé et les fibres de renfort à point de fusion plus bas (10) sont constituées de la même matière plastique.

2. Procédé selon la revendication 1, le laminé (4) étant renforcé au moyen d'au moins un type de mode de renfort compris dans le groupe « aiguilletage mécanique, renfort au jet d'eau, calandrage, thermo-assemblage à l'air chaud, collage, liaison chimique ».

3. Procédé selon l'une quelconque des revendications 1 ou 2, le laminé (4) ou le laminé (4) renforcé étant soumis en une étape à une chaleur et/ou à une pression et à cet effet étant créé un autre produit semi-fini pourvu d'une matrice en matière thermoplastique et de matière de renfort qui y est incorporée ou de fibres de renfort qui y sont incorporées et dans une deuxième étape, étant retraité pour obtenir la pièce moulée composite ou la pièce moulée composite renforcée par fibres (7).

4. Procédé selon l'une quelconque des revendications 1 à 3, après le filage à une épaisseur de fibres < 1,11 tex, de préférence < 0,33 tex et de manière particulièrement préférentielle < 0,17 tex, les fibres à point de fusion plus bas (10) étant associées avec la matière de renfort à point de fusion plus élevé, notamment avec les fibres de renfort à point de fusion plus élevé, pour obtenir le laminé (4) formant le produit semi-fini.

5. Procédé selon l'une quelconque des revendications 1 à 4, les fibres de renfort à point de fusion plus bas (10) étant associées sous la forme d'un non-tissé entremêlé ou sous la forme d'une étoffe non-tissée avec la matière de renfort ou avec les fibres de renfort.

6. Procédé selon l'une quelconque des revendications 1 à 5, les fibres de renfort à point de fusion plus bas (10) étant créées ou tissées sous la forme de filaments continus.

7. Procédé selon l'une quelconque des revendications 1 à 6, les fibres de renfort à point de fusion plus bas (10) étant tissées sous la forme de fibres obtenues par fusion-soufflage et de manière particulièrement préférentielle, sous la forme de fibres bi-axiales obtenues par fusion-soufflage.

8. Procédé selon l'une quelconque des revendications 1 à 7, le point de fusion de la matière de renfort à point de fusion plus élevé ou des fibres de renfort à point de fusion plus élevé étant supérieur d'au moins 1 °C, de préférence d'au moins 5 °C au point de fusion des fibres de renfort à point de fusion plus bas (10).

9. Procédé selon l'une quelconque des revendications 1 à 8, des fibres de renfort à point de fusion plus élevé d'au moins un type de fibres du groupe « fibres de verre (8), fibres d'aramide, fibres de carbone, fibres métalliques, fibres en matière thermoplastique » étant mises en œuvre.

10. Procédé selon l'une quelconque des revendications 1 à 9, une couche de la matière de renfort à point de fusion plus élevé - notamment en fibres de renfort à point de fusion plus élevé - étant placée entre deux couches en fibres de renfort à point de fusion plus bas (10), pour obtenir le laminé (4).

11. Procédé, destiné à fabriquer une pièce moulée composite (7), notamment une pièce moulée composite renforcée par fibres, un produit semi-fini - fabriqué selon l'une quelconque des revendications 1 à 10 - étant soumis à une chaleur et/ou à une pression, de sorte que les fibres de renfort à point de fusion plus bas (10) fondent et que la matière de renfort - notamment les fibres de renfort - soit/soient imprégnée (s) par la masse fondue ou s'incorpore(nt) dans la matrice en matière thermoplastique.

12. Procédé selon la revendication 11, le produit semi-fini étant transformé par soumission à une chaleur et/ou à une pression au cours d'un processus de thermoformage et/ou d'un processus de moulage par injection, pour obtenir la pièce moulée composite ou la pièce moulée composite renforcée par fibres (7).
